# EUROPEAN PATENT APPLICATION

(11) **EP 4 501 565 A1**
(43) Date of publication of application: **05.02.2025**
(21) Application number: 24191662.6
(22) Date of filing: 30.07.2024
(51) Int. Cl.: B27N 7/00, B27D 1/08, B44C 1/24, B44C 5/04, B44F 7/00, B32B 21/02, B32B 21/04, B32B 21/10, B32B 21/14, B27N 3/04, B27N 3/02, B32B 21/13

(54) **METHOD OF CREATION OF THREE-DIMENSIONAL STRUCTURES ON WOOD FIBERS WITH PLANAR SURFACES**

(30) Priority: 02.08.2023 IT 202300016440
(71) Applicant: Tabu S.p.A., 22063 Cantù, Como (IT)
(72) Inventor: TAGLIABUE, Andrea, I-22063 Cantù, COMO (IT); CREDARO, Andrea, I-22063 Cantù, COMO (IT); ROMITO, Paolo Mauro, I-22063 Cantù, COMO (IT)
(74) Representative: Long, Giorgio

(57) **Abstract**

The present invention concerns a method for the creation of three-dimensional structures on wood fibers with planar surfaces.

In particular, the invention concerns a method of making three-dimensional structures on wood fibers with planar surfaces, comprising the following steps, not necessarily in the following preferred sequence:
a) providing a wood surface;
b) subjecting said wood surface to compression by applying variable pressure in zones so as to create a different topographic compaction of the wood fibers;
c) coupling the wood surface obtained in step b) with a support element;
d) smoothing and calibrating the supported wood surface obtained according to step c) in order to restore the flatness of the surface and to develop a design with three-dimensional perspective.

## Description

### FIELD OF THE INVENTION

The present invention concerns a method for the creation of three-dimensional structures on wood fibers with planar surfaces.

### BACKGROUND ART

The creation of wood panels or coverings for furniture, furnishing elements or walls (boiserie) with a new and aesthetically appreciable appearance, wood coverings for cars, is a source of continuous research by companies specialized in the woodworking sector.

In particular, a felt problem is that of being able to impart a three-dimensional appearance or perspective to a planar surface, for example a veneer for covering wood.

By three-dimensional appearance or perspective we mean, for example, the typical irregular appearance, defined by knots and fibers evident in three-dimensional perspective, which a fine wood panel takes on once it has been suitably worked and sanded. Alternatively, the three-dimensional effect of the planar surface can be created with designs of various shapes, irregular or geometric, which however are not created by ink printing or similar.

### SUMMARY OF THE INVENTION

The above object has been achieved by means of a method of making three-dimensional structures on wood fibers with planar surfaces as defined in the attached claims, the definitions of which form an integral part of the present disclosure for the purposes of the sufficiency of the description.

An object of the present invention is therefore a method of making three-dimensional structures on wood fibers with planar surfaces, comprising the following steps:
a) providing a wood surface;
b) subjecting said wood surface to compression by applying variable pressure in zones so as to create a different topographic compaction of the wood fibers;
c) coupling the wood surface obtained in step b) with a support element;
d) smoothing and calibrating the supported wood surface obtained according to step c) in order to restore the flatness of the surface and to develop a design with three-dimensional perspective.

Another object of the invention is a material obtainable by the method of the invention, comprising a planar wood surface on which a drawing with three-dimensional perspective is created.

Further characteristics and advantages of the invention will appear from the following description of implementation examples, given for indicative and nonlimiting purposes.

### BRIEF DESCRIPTION OF THE DRAWINGS

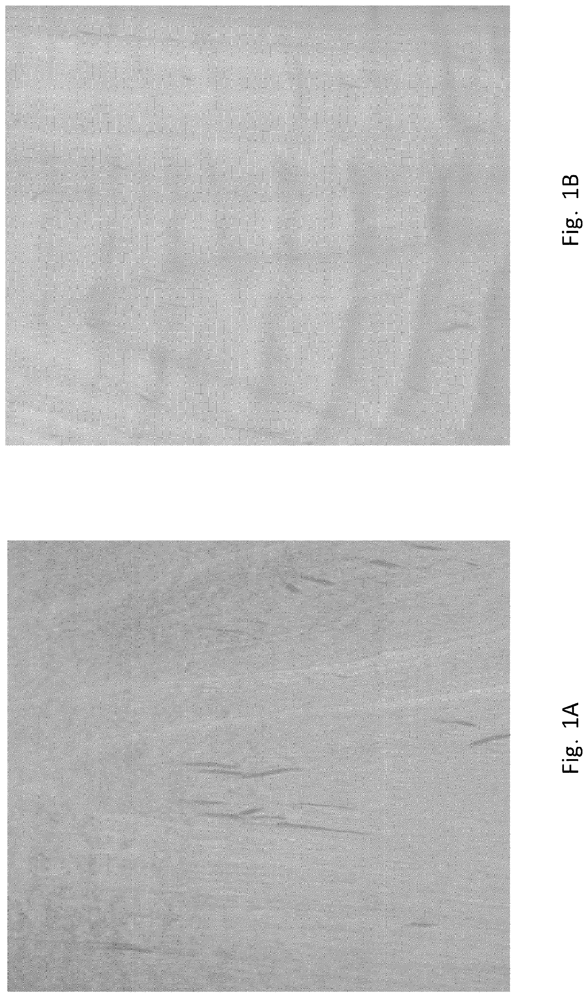

Figures 1A and 1B show, respectively, a wood panel before and after having been subjected to the method of the present invention.

### DETAILED DESCRIPTION OF THE INVENTION

According to a first embodiment, the method of making three-dimensional structures on wood fibers with planar surfaces according to the invention includes the following steps in sequence:
a) providing a wood surface;
b) subjecting said wood surface to compression by applying variable pressure in areas so as to create a different topographic compaction of the wood fibers;
c) coupling the wood surface obtained in step b) with a support element;
d) smoothing and calibrating the supported wood surface obtained according to step c) in order to restore the flatness of the surface and to develop a design with three-dimensional perspective.

In certain embodiments, steps b) and c) may be performed in reversed order.

The wood surface of step a) is for example a sheet or veneer of a wood species such as commercially named oak, ayous, maple, chestnut, walnut, pine, fir, eucalyptus, mahogany, erable, tanganika, tay, ash, bolivar, taba, fromajer, and the like.

For the purposes of the present invention, compression step b) is a manufacturing process that involves the use of heat and pressure for the application of three-dimensional figures (embossing) on the wood surface.

Step b) of compression is carried out by applying a predetermined pressure and temperature to the wood surface. For the purposes of the present invention, it is possible to advantageously operate at a temperature between 90°C and 170°C, preferably between 110°C and 160°C, more preferably between 120°C and 150°C, and at a pressure between 10 and 100 Kg/cm², preferably between 20 and 80 Kg/cm², more preferably between 30 and 70 Kg/cm², even more preferably between 40 and 60 Kg/cm².

Step b) is carried out for a time generally greater than 1 second and which may depend on the shape and wood essence being processed and can preferably vary from 1 to 60 seconds, more preferably from 10 to 30 seconds. It must be understood that, while, in the case of the use of a calender, minimum times of even 1 second can be applied, there is no particular upper limit of application times. The timing is in fact solely dictated by the cost-effectiveness of the process.

In step b) conventional equipment can be used, such as hydraulic presses (discontinuous process) or calenders (continuous process).

Depending on whether a hydraulic press or a calender is used, these devices will be equipped, respectively, with a shaped plate or a machined roller in order to impart said variable pressure in areas onto the wood surface.

The shaped plate is made up of a sheet generally made of metal (iron, aluminium, alloys such as steel, etc.) which is fixed to pistons through a coupling system so as to follow their movement. Similarly, the calender rollers will have a surface with embossed or negative designs.

The plates or rollers are specifically shaped with a unique design for each individual figure to be imprinted. The variable compression of the fibers is generated by the variable height of the crests of the design engraved in high relief and in negative on the plate. The higher the crest, with the same pressure generated by the hydraulic press or the calender roller, the more compacted the wood fibers will be.

Variable compression can also be obtained by working a number of overlapping sheets of wood, for example three sheets, obtaining greater or lesser compression if the sheets come into contact with the plate or not. In particular, a greater marking is observed in the sheet directly in contact with the plate and a smaller one in the furthest layer. In this way, sheets with a different three-dimensional effect can be obtained in a single step, which can be used independently even on different types of products.

The compression process can take place in a single phase or in several separate or consecutive phases which involve subsequent reworking with the same plate/roller or a different processing, both on the same surface of the sheet and on the opposite one.

As mentioned, the temperature influences the process: a higher temperature tends to facilitate the compression/marking phase by decreasing the mechanical resistance of the wood.

Furthermore, the greater the pressure, the more the wood fibers are compressed. The pressure limit is reached when the material breaks, i.e. when the resistance limit of the fibers is reached, which will depend on the type of design, the wood species and the thickness of the wood surface subjected to step a). The maximum pressure can be determined from time to time through experimental testing.

The coupling step c) involves gluing or laminating the compressed wood surface according to step b) onto a second material which acts as a support element. This coupling process is useful for improving or enhancing the intrinsic characteristics of the material: for example, by increasing its rigidity, thickness, etc. or to provide it with new properties, such as flexibility, mechanical resistance, etc..

The support element is chosen from different types of materials, such as vegetal or synthetic organic matrices, for example paper, non-woven fabric of various weights, wood (such as multilayer panels, MDF, chipboard or other in various thicknesses), etc., or inorganic matrices, for example metals (aluminum foil, glass fiber, etc.). The support element will generally be chosen based on the type of application for which the final material is intended.

More preferably, the support element is a cellulose-based non-woven fabric (80% vegetable fibers) with a weight of approximately 90 g/m².

For the coupling step c), different types of glues can be used, both liquid and solid such as vinyl, acrylic, phenolic, polyurethane or similar based glues.

Like the previous step b), the coupling step c) can be carried out in a hydraulic press or in a calender, either hot or cold depending on the support element used and the type of adhesive. The technical conditions for this step depend directly on the nature of the raw materials used, the pressure range varying from 4 to 100 Kg/cm², with temperatures varying between 70°C and 160°C and with processing times between 30 and 120 seconds. In preferred embodiments, the coupling is carried out at a temperature between 100°C and 150°C, more preferably between 125°C and 140°C and a pressure between 6 and 60 Kg/cm², more preferably between 7,5 and 40 Kg/cm².

The sanding step d) includes the sanding and calibration of the supported wood surface obtained in step c).

The calibration process is the process of removing material in order to reduce the thickness across the entire surface in a homogeneous manner. The sanding process is the process useful for bringing the surface, which was made irregular by previous processes, back to flatness, smoothing it and preparing it for any subsequent processing. These processes can also occur simultaneously. The abrasive papers used influence the aesthetic and technical performance of the product, it is possible to use abrasive papers with grits that vary between 60 and 400.

The wood surface, previously compressed topographically and coupled to the support element, is passed inside a calibrator/sander. The material in this way is simultaneously calibrated bringing it back to a standard thickness between 0.1 mm and 2 mm, preferably between 0.3 mm and 1 mm, more preferably around 0.5 mm, and at the same time it is smoothed bringing back the wood surface, which presents compression zones of different entities, at the initial flatness.

The sander/calibrator is of a conventional type. A steel frame supports one or more pairs of rollers on which sandpaper belts of different grains slide. In a single machine there can be a variable number of pairs of rollers which can even reach the number of six. The surface to be smoothed/calibrated is passed under the rollers on a motorized belt which allows it to slide. The surface with the carpet is adjustable in height, allowing one to adjust the thickness of the material whose surface it is desired to smooth/calibrate. The machinery is supported by a suction system to avoid dust accumulation.

At the end of step d), a material is obtained comprising a planar wood surface on which a drawing with three-dimensional perspective is created, which constitutes a further object of the present invention.

Figures 1A and 1B show, respectively, a wood panel before and after the processing object of the present invention. The three-dimensional effect obtained is evident, despite the fact that the flatness of the machined surface has been preserved.

The three-dimensional drawing shown in figure 1B is only indicative, being one of the countless drawings that can be imparted to the woody surface, depending on the shape and extent of the topographic compression imparted to said surface.

The material thus obtained can be used in an equivalent way to a normal wood veneer, for example for the production of veneer or components for furniture or other furnishing elements.

It is evident that what has been described is only a particular embodiment of the present invention. The expert in the art will be able to make all those modifications to the method of the invention necessary for its adaptation to particular conditions and forms of application, without however departing from the scope of protection as defined in the attached claims.

## Claims

1. A method for making three-dimensional structures on wood fibers with planar surfaces, comprising the following steps in sequence:
a) providing a wood surface;
b) subjecting said wood surface to compression by applying a varying pressure to zones so as to create a different topographic compaction of the wood fibers;
c) coupling the wood surface obtained in step b) to a support element;
d) smoothing and calibrating the supported wood surface obtained according to step c) so as to restore the flatness of the surface and develop a drawing with three-dimensional perspective.

2. The method according to claim 1, wherein the wood surface of step a) is selected from a sheet or veneer of a wood species such as oak, ayous, maple, chestnut, walnut, pine, fir, eucalyptus, mahogany, erable, tanganyika, tay, ash, bolivar, taba, fromager, and the like.

3. The method according to claim 1 or 2, wherein the compression step b) is carried out by applying a predetermined pressure and temperature to the wood surface, wherein the temperature is between 90°C and 170°C, preferably between 110°C and 160°C, more preferably between 120°C and 150°C, and the pressure is between 10 and 100 Kg/cm², preferably between 20 and 80 Kg/cm², more preferably between 30 and 70 Kg /cm², even more preferably between 40 and 60 Kg/cm².

4. The method according to any one of claims 1 to 3, wherein step b) is carried out for a time longer than 1 second, preferably from 10 to 30 seconds.

5. The method according to any one of claims 1 to 4, wherein step b) is carried out by means of a hydraulic press or a calender, wherein the hydraulic press or calender is provided with a shaped plate or a machined surface, respectively, wherein the varying compression of the fibers of the wood surface is generated by the varying height of the ridges of the high-relief and negative engraved drawing on the plate or surface of the roller.

6. The method according to any one of claims 1 to 5, wherein the compression step b) can occur in several separate or consecutive steps which include cooling the semi-finished piece and then re-machining it with the same or a different plate or roller.

7. The method according to any one of claims 1 to 6, wherein the coupling step c) includes gluing or rolling the compressed wood surface according to step b) on a second material acting as a support element.

8. The method according to claim 7, wherein the gluing is obtained by means of liquid or solid glues, preferably vinyl-, acrylic-, phenol-, polyurethane-based glues or the like.

9. The method according to any one of claims 1 to 8, wherein the support element is selected from materials of a synthetic or vegetable organic matrix, for example paper, non-woven fabric of various basis weight, wood, or of an inorganic matrix, for example metals such as aluminum foil or fiberglass.

10. The method according to claim 9, wherein the support element is a cellulose-based non-woven fabric with 80% vegetable fibers, having a basis weight of about 90 g/m².

11. The method according to any one of claims 1 to 10, wherein step c) is carried out by means of a hydraulic press or calender, by applying a pressure between 4 and 100 Kg/cm², preferably between 6 and 60 Kg/cm², more preferably between 7.5 and 40 Kg/cm², and a temperature between 70°C and 160°C, preferably between 100°C and 150°C, more preferably between 125°C and 140°C, and with machining times between 30 and 120 seconds.

12. The method according to any one of claims 1 to 11, wherein step d) is carried out by means of a polisher/calibrator using abrasive papers with grits ranging between 60 and 400.

13. The method according to any one of claims 1 to 12, wherein the wood surface is calibrated bringing it back to a standard thickness between 0.1 mm and 2 mm, or between 0.3 mm and 1 mm, or about 0.5 mm, and smoothed bringing the wood surface, having compression zones of different size, back to the initial flatness.

14. The method according to any one of claims 1 to 13, wherein steps b) and c) are carried out in a reverse order.

15. A material obtainable by the method according to any one of claims 1 to 14, comprising a planar wood surface on which a three-dimensional perspective drawing is made.
